# EUROPÄISCHE PATENTANMELDUNG

(11) **EP 4 425 002 A1**
(43) Veröffentlichungstag der Anmeldung: **04.09.2024**
(21) Anmeldenummer: 24159967.9
(22) Anmeldetag: 27.02.2024
(51) Int. Cl.: F16B 5/02, F16B 5/06, F16B 25/00

(54) **SCHRAUBVERBINDUNG**

(30) Priorität: 28.02.2023 DE 102023201826
(71) Anmelder: AKO-Kunststoffe Alfred Kolb GmbH, 74889 Sinsheim-Hoffenheim (DE)
(72) Erfinder: Müller, Harald, 69723 Oftersheim (DE); Gawron, Lukas, 74921 Helmstadt-Bargen (DE)
(74) Vertreter: Patentanwälte Ruff, Wilhelm, Beier, Dauster & Partner mbB

(57) **Zusammenfassung**

Die Erfindung beschreibt eine Schraubverbindung zur festen Verbindung zweier Bauteile (1, 2) miteinander, und weist ein erstes Bauteil (1) auf, das an einem Rand (14) davon einen rippenförmigen Verbindungsbereich (3) aufweist, sowie einen Verbindungskörper (4), der an diesem Verbindungsbereich (3) fest angeordnet ist, eine selbstschneidende Schraube (5) und ein zweites Bauteil (2). Das zweite Bauteil (2) ist mittels dieser Schraube (5) fest mit dem Verbindungskörper (4) und dem ersten Bauteil (1) verbunden. Dabei weist der Verbindungskörper (4) eine Bohrung entlang zu dem ersten Bauteil (1) auf dessen erster Seite (7) auf sowie einen Widerlagerabschnitt (8), der an einer der ersten Seite (7) abgewandten, zweiten Seite (9) des ersten Bauteils (1) angeordnet ist. Der Verbindungskörper (4) weist eine schlitzartige Ausnehmung (10) am Widerlagerabschnitt (8) auf, durch die das erste Bauteil (1) verläuft. Die Bohrung (6) im Verbindungskörper (4) steht über das erste Bauteil (1) derart über, dass die in sie eingeschraubte Schraube (5) in einem von ihr geformten Gewinde (11) in das erste Bauteil (1) eingeschraubt ist.

## Beschreibung

### Anwendungsgebiet und Stand der Technik

Die Erfindung bezieht sich auf eine Schraubverbindung zur festen Verbindung zweier Bauteile miteinander, wobei vorteilhaft mindestens ein Bauteil plattenförmig ist.

Beim Verbinden bzw. Verschrauben zweier Bauteile miteinander, insbesondere zweier Kunststoffteile, können die Bauteile entweder mittels Hilfselementen, wie z. B. Gewindebuchsen, Blechmuttern odgl., oder in Form von Direktverschraubungen mittels selbstschneidender bzw. gewindefurchender Schrauben in Durchbrüche oder in Schraubdome hinein miteinander verbunden werden. Insbesondere bei der Herstellung von Schraubdomen kommt es in einem Schraubdomgrund sehr häufig zu Entlüftungs- und Kühlproblemen. Dies führt auf der Sichtseite bzw. der Rückseite der Schraubdome zu optischen Fehlern, wie Einfallstellen und Glanzstellen.

Aus der US 3106994 A ist eine Befestigungsanordnung mit einem ersten und einem zweiten Strukturelement bekannt. Die Strukturelemente sind in einem Winkel zueinander geneigt, wobei jedes der beiden eine Öffnung aufweist. Die Befestigungsanordnung weist einen Tischlereinsatz mit einem Körper auf, der so bemessen ist, dass er in die Öffnung des ersten Elements eingeführt werden kann, wobei der Körper eine Durchgangsbohrung aufweist, die parallel zu dem ersten Element verläuft. Zudem weist die Befestigungsanordnung eine Schraube auf, die in der Öffnung des zweiten Elements und in der Durchgangsbohrung positioniert ist, wobei das Gewinde der Schraube in Umfangsrichtung größer ist als die Durchgangsbohrung. Ein Flansch ist mit dem Körper des Tischlereinsatzes verbunden, wobei der Flansch die Öffnung des ersten Elements vollständig abdeckt, wenn der Körper in die Öffnung eingesetzt ist.

Die US 5674023 A offenbart eine Verbindungsanordnung, wobei ein erstes Teil an einer Oberfläche eines zweiten Teils anliegt. Dabei ist eine Öffnung in dem ersten Teil vorgesehen, die von der Oberfläche des zweiten Teils beabstandet ist. Die Verbindungsanordnung weist eine Klammer mit zwei beabstandeten Platten auf, die durch einen Rücken verbunden sind. Die eine Platte hat eine hakenförmige Zunge, die in die Öffnung des ersten Teils eingreift. Die andere Platte sitzt auf dem zweiten Teil. Beide Platten haben Kanten, die am ersten Teil anliegen. In Durchgangsbohrungen in den Platten ist eine Schraube aufgenommen, die die Klammer am zweiten Teil hält und die beiden Teile zusammenzieht.

### Aufgabe und Lösung

Der Erfindung liegt die Aufgabe zugrunde, eine Schraubverbindung zu schaffen, die gegenüber dem Stand der Technik Vorteile insbesondere hinsichtlich Aufbau, Herstellungsaufwand, Montage- und Demontageaufwand, Funktionsweise, Flexibilität, Stabilität und/oder Wiederverwendbarkeit bietet und insbesondere leicht herstellbar ist sowie dauerhaft stabil ist.

Gelöst wird diese Aufgabe durch eine Schraubverbindung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Die Schraubverbindung weist ein erstes Bauteil, das an einem Rand davon zumindest abschnittsweise einen rippenförmigen bzw. plattenförmigen Verbindungsbereich aufweist, einen Verbindungskörper, der an dem rippenförmigen Verbindungsbereich des ersten Bauteils fest angeordnet ist, eine selbstschneidende bzw. gewindefurchende Schraube und ein zweites Bauteil auf. Das zweite Bauteil ist mittels der Schraube fest mit dem Verbindungskörper und dem ersten Bauteil verbunden. Dabei weist der Verbindungskörper eine Bohrung auf, die entlang zu dem ersten Bauteil auf einer ersten Seite des ersten Bauteils angeordnet ist, und weist einen Widerlagerabschnitt auf, der an einer der ersten Seite abgewandten, zweiten Seite des ersten Bauteils angeordnet ist.

Bei der erfindungsgemäßen Schraubverbindung weist der Verbindungskörper eine Ausnehmung am Widerlagerabschnitt auf. Dabei verläuft das erste Bauteil durch diese Ausnehmung. Weiter steht die Bohrung im Verbindungskörper zumindest teilweise über oder in das erste Bauteil derart über bzw. überschneidet sie oder verläuft darüber, dass die in die Bohrung eingeschraubte Schraube in einem von ihr geformten Gewinde in das erste Bauteil eingeschraubt ist. In anderen Worten: die Bohrung im Verbindungskörper verläuft zumindest teilweise über das erste Bauteil, so dass die selbstschneidende Schraube Teil-Gewindegänge in das erste Bauteil schneidet. So ist eine gute Haltewirkung erreichbar.

Die Schraubverbindung zur festen Verbindung zweier Bauteile miteinander ist vorzugsweise lösbar. Der Verbindungsbereich des ersten Bauteils ist vorzugsweise flach ausgebildet. Der Verbindungskörper ist vorzugsweise fest mit dem Verbindungsbereich des ersten Bauteils verbunden, insbesondere lösbar.

Die Schraubverbindung ist nicht auf einen spezifischen Schraubendurchmesser begrenzt. So kann die Schraubverbindung bzw. der Verbindungskörper sowohl für Schrauben mit kleinen Durchmessern, z.B. mit Durchmessern kleiner als 3 mm, für Schrauben mit mittleren Durchmessern, z.B. mit Durchmessern von 3 mm bis 10 mm, als auch für Schrauben mit großen Durchmessern, z.B. mit Durchmessern größer als 10 mm, ausgelegt sein.

Das erste Bauteil ist vorzugsweise aus einem Kunststoffmaterial ausgebildet, wie z.B. aus einem Thermoplast oder aus einem Duroplast. In alternativen Ausführungen kann das erste Bauteil aus Holz, aus einem Weichmetall, wie z.B. Aluminium, Zink oder Magnesium, oder aus einem Hartmetall, wie z.B. Stahl, sein. Das erste Bauteil ist vorzugsweise ein Spritzgussteil.

Eine derartige erfindungsgemäße Schraubverbindung eignet sich insbesondere zur rechtwinkligen Verbindung zweier Bauteile miteinander. Der Verbindungskörper lässt eine Verschraubung an einem rippenförmigen bzw. plattenförmigen Verbindungsbereich eines Bauteils zu, ohne dass hierfür eine Aufnahmebohrung oder dgl. im Bauteil erforderlich ist.

Zur Verbindung zweier Bauteile miteinander wird zunächst der Verbindungskörper mittels der Ausnehmung auf das erste Bauteil, insbesondere an seinem rippenförmigen bzw. plattenförmigen Verbindungsbereich, aufgesetzt bzw. aufgestülpt. Anschließend kann ein zweites Bauteil auf das erste Bauteil bzw. auf eine Oberseite des Verbindungskörpers aufgelegt werden und mit diesem verschraubt werden. Danach wird die selbstschneidende bzw. gewindefurchende Schraube durch das zweite Bauteil in die Bohrung in dem Verbindungskörper geschraubt. Dabei schneidet bzw. furcht die Schraube zumindest im Verbindungsbereich des ersten Bauteils ein Gewinde bzw. ein Teil-Gewinde ein. In bevorzugten Ausführungen schneidet bzw. furcht die Schraube nur im Verbindungsbereich des ersten Bauteils ein Gewinde bzw. ein Teil-Gewinde ein. Die Innenseite der Bohrung im Verbindungskörper dient hierbei für die Schraube als eine Art Widerlager, so dass sich das Gewinde der Schraube möglichst stark in das erste Bauteil formt oder furcht bzw. einschneidet. In alternativen Ausführungen schneidet bzw. furcht die Schraube zusätzlich in den Verbindungskörper ein Gewinde ein. Da die Schraube zur gleichen Zeit über das geschnittene bzw. gefurchte Gewinde mit dem ersten Bauteil und dem Verbindungskörper im Formschluss ist, kann eine feste und sichere Verschraubung gewährleistet werden.

In einer Weiterbildung der Erfindung steht die Bohrung im Verbindungskörper mindestens um 5%, vorzugsweise um mindestens 10%, des Durchmessers der Bohrung über oder in das erste Bauteil über, insbesondere bis zu 30% oder bis zu 35%. Dies stellt eine konstruktiv und funktionell vorteilhafte Realisierung für die Festigkeit der Schraubverbindung dar. Das Maß der Überschneidung bzw. des Überstands zwischen der Bohrung im Verbindungskörper und dem ersten Bauteil entspricht vorzugsweise im Wesentlichen einer Gewindetiefe der Schraube. Die Schraube kann sogar bis zu ihrem Schraubenkern tief in das erste Bauteil eingreifen bzw. einschneiden. Der Durchmesser der Schraube kann dem Durchmesser der Bohrung entsprechen, wobei sich vorzugsweise das Gewinde der Schraube nur in das erste Bauteil formt. In alternativen Ausführungen liegt die Bohrung im Verbindungskörper an dem ersten Bauteil an. Dabei ist der Durchmesser der Schraube größer als der Durchmesser der Bohrung, so dass sich das Gewinde der Schraube zumindest in das erste Bauteil formt bzw. einschneidet.

In einer Weiterbildung der Erfindung greift die Schraube innerhalb bzw. entlang der Bohrung in das erste Bauteil ein. Dies stellt eine konstruktiv und funktionell vorteilhafte Realisierung der Schraubverbindung dar. Dies ermöglicht zudem, dass die Spitze bzw. das Ende und das Gewinde der Schraube vollständig in dem Verbindungskörper aufgenommen sind, so dass dies unter sicherheitsrelevanten und auch unter gestalterischen Gesichtspunkten eine vorteilhafte Realisierung darstellt. Die Schraube greift vorzugsweise entlang der gesamten Bohrung in das erste Bauteil ein. In alternativen Ausführungen greift die Schraube außerhalb der Bohrung, insbesondere in Einschraubrichtung nach der Bohrung, in das erste Bauteil ein.

In einer Weiterbildung der Erfindung weist das erste Bauteil am Rand eine Aufnahmeausnehmung auf, in welche der Verbindungskörper derart eingesetzt ist, dass er weiter vom Rand weg zur Fläche des ersten Bauteils versetzt ist. Dies stellt eine konstruktiv und funktionell vorteilhafte Realisierung der Schraubverbindung dar, indem dadurch der Verbindungskörper formschlüssig an die exakt dafür vorgesehene Position an das erste Bauteil angebracht werden kann. Eine Stirnseite des Verbindungskörpers, durch welche die Bohrung verläuft, ist vorzugsweise bündig mit einer Stirnseite des ersten Bauteils. Dies ermöglicht es, das zweite Bauteil unmittelbar auf das erste Bauteil bzw. die Stirnseite des Verbindungskörpers aufzulegen bzw. dort anzubringen.

In einer Weiterbildung der Erfindung weist der Verbindungskörper zumindest an einer Seite der Ausnehmung ein Stützelement auf, das gegen eine Seite des ersten Bauteils anliegt. Dies stellt eine konstruktiv und funktionell vorteilhafte Realisierung der Schraubverbindung dar, insbesondere hinsichtlich der Stabilität der Schraubverbindung. Denn durch die zusätzliche seitliche Abstützung ist der Verbindungskörper beim Einschrauben der Schraube gegen eine Verdrehung und/oder eine Verformung zusätzlich gesichert, insbesondere bei hohen Anzugsmomenten. Das Stützelement liegt vorzugsweise klammerartig gegen beide Seiten des ersten Bauteils an. Dabei entspricht ein Abstand zwischen den beiden innenliegenden Klammerflächen zueinander einer Dicke des ersten Bauteils im Verbindungsbereich, so dass die Klammerflächen an dem ersten Bauteil formschlüssig anliegen.

In einer Weiterbildung der Erfindung überschneidet sich die Ausnehmung des Verbindungskörpers zumindest teilweise mit der Bohrung im Verbindungskörper. Dies stellt eine konstruktiv und funktionell vorteilhafte Realisierung des Verbindungskörpers dar, da dadurch die Festigkeit und die Stabilität der Schraubverbindung weiter verbessert wird. Dies ermöglicht, dass die Bohrung im Verbindungskörper über oder in das erste Bauteil übersteht. In alternativen Ausführungen liegt die Ausnehmung des Verbindungskörpers unmittelbar an der Bohrung im Verbindungskörper an.

In einer Weiterbildung der Erfindung entspricht eine Breite der Ausnehmung des Verbindungskörpers einer Dicke des ersten Bauteils im Verbindungsbereich. Dies stellt eine konstruktiv und funktionell vorteilhafte Realisierung des Verbindungskörpers dar, da dadurch der Verbindungskörper in der korrekten Position auf das erste Bauteil passgenau bzw. formschlüssig aufgesetzt werden kann.

In einer Weiterbildung der Erfindung ist die Bohrung im Verbindungskörper eine auf beiden Seiten offene Durchgangsbohrung. Dies stellt eine konstruktiv und vor allem herstellungstechnisch vorteilhafte Realisierung des Verbindungskörpers dar. Der Verbindungskörper ist dadurch für Schrauben mit unterschiedlichen Längen verwendbar, ohne dass es hierbei einer Anpassung des Verbindungskörpers bedarf. Alternativ ist die Bohrung im Verbindungskörper eine an einer Seite geschlossene Sackbohrung.

In einer Weiterbildung der Erfindung ist der Verbindungskörper aus einem Kunststoffmaterial. Dies stellt eine kostengünstige und herstellungstechnisch vorteilhafte Realisierung des Verbindungskörpers dar. Der Verbindungskörper ist vorzugsweise ein Spritzgussteil. Der Verbindungskörper ist vorzugsweise aus einem faserverstärkten Kunststoff, wobei der Kunststoff z.B. mit Glasfasern verstärkt ist. In alternativen Ausführungen kann der Verbindungskörper aus einem Metall, z.B. aus Stahl oder aus Gusseisen, sein.

In einer Weiterbildung der Erfindung ist der Verbindungskörper U-förmig ausgebildet. Dabei weist eine Seite des U-förmigen Verbindungskörpers die Bohrung für die Schraube auf, und die andere Seite weist den Widerlagerabschnitt auf bzw. entspricht diesem. Dies stellt eine konstruktiv und funktionell vorteilhafte Realisierung des Verbindungskörpers dar. Dies ermöglicht es, den Verbindungskörper im Verbindungsbereich des ersten Bauteils entlang seines Rands zu verschieben und den Verbindungskörper entsprechend einer zur Verschraubung des zweiten Bauteils vorgesehenen Bohrung im zweiten Bauteil ausrichten zu können. In alternativen Ausführungen ist der Verbindungskörper kastenförmig bzw. blockartig ausgebildet bzw. seitlich verschlossen.

In einer Weiterbildung der Erfindung ist das zweite Bauteil ein glockenförmiger Aufsatz, welcher mit einem dritten Bauteil verbunden ist. Dies stellt eine konstruktiv und funktionell vorteilhafte Realisierung des Schraubverbindung dar. Dabei weist das dritte Bauteil vorzugsweise eine Bohrung auf, in welche der glockenförmige Aufsatz formschlüssig eingesetzt, insbesondere eingepresst, ist. Das dritte Bauteil ist dann mittels des glockenförmigen Aufsatz mit dem ersten Bauteil bzw. dem Verbindungskörper verbunden. Dazu weist der glockenförmige Aufsatz eine zur Bohrung im Verbindungskörper korrespondierende Bohrung auf. In einer alternativen Ausführung ist das zweite Bauteil plattenförmig ausgebildet. Dabei weist das zweite Bauteil vorzugsweise eine Bohrung auf, durch welche die Schraube in den Verbindungskörper geschraubt ist und dadurch das zweite Bauteil mit dem ersten Bauteil fest verbindet. Das erste Bauteil kann flach bzw. plattenförmig sein, vorzugsweise zumindest im Bereich der Schraubverbindung.

In einer Weiterbildung der Erfindung ist im Verbindungsbereich des ersten Bauteils eine Rippenzunge durch zwei parallele Schlitze ausgeformt, auf welche der Verbindungskörper aufgesetzt ist und die Rippenzunge vollumfänglich umschließt. Dies stellt eine konstruktiv und funktionell vorteilhafte Realisierung des Schraubverbindung dar. Dabei weist der Verbindungskörper vorzugsweise Verbindungsrippen zum Widerlagerabschnitt auf, die in den Schlitzen verlaufen, vorzugsweise formschlüssig.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine Perspektivansicht von schräg oben hinten auf eine erfindungsgemäße Schraubverbindung mit zwei fest verbundenen Bauteilen und einer ersten Ausführung eines Verbindungskörpers, wobei ein zweites Bauteil ein glockenförmiger Aufsatz ist,
- Fig. 2: eine Schnittansicht längs einer Linie II-II in Fig. 1,
- Fig. 3: eine Schnittansicht längs einer Linie III-III in Fig. 2,
- Fig. 4: eine Perspektivansicht von schräg oben vorne auf eine Schraubverbindung mit zwei fest verbundenen Bauteilen und einer zweiten Ausführung eines Verbindungskörpers, wobei das zweite Bauteil ein glockenförmiger Aufsatz ist,
- Fig. 5: eine Perspektivansicht von schräg oben hinten auf die Schraubverbindung von Fig. 4,
- Fig. 6: eine Schnittansicht längs einer Linie VI-VI in Fig. 5,
- Fig. 7: die Schraubverbindung von Fig. 5, wobei der Verbindungskörper in eine abgeschrägte Aufnahme des ersten Bauteils eingesetzt ist,
- Fig. 8: eine Schnittansicht längs einer Linie VIII-VIII in Fig. 7,
- Fig. 9: die Schnittansicht von Fig. 3, wobei ein drittes Bauteil mit dem glockenförmigen, zweiten Bauteil verbunden ist,
- Fig. 10: die Schnittansicht von Fig. 3, wobei das zweite Bauteil plattenförmig ausgebildet ist,
- Fig. 11: eine Schnittansicht längs einer Linie XI-XI in Fig. 10,
- Fig. 12: eine Schnittansicht längs einer Linie XII-XII in Fig. 10,
- Fig. 13: eine Perspektivansicht von schräg unten auf eine dritte Ausführung eines Verbindungskörpers und
- Fig. 14: eine Perspektivansicht von schräg oben auf den Verbindungskörper von Fig. 13.

### Detaillierte Beschreibung der Ausführungsbeispiele

Wie in den Figuren anhand mehrerer exemplarischer Ausführungen veranschaulicht ist, ist die erfindungsgemäße Schraubverbindung zur festen, vorzugsweise rechtwinkligen, Verbindung zweier Bauteile 1, 2 miteinander ausgebildet. Dazu gehört zur Schraubverbindung ein erstes Bauteil 1, das an einem Rand 14 davon zumindest abschnittsweise einen rippenförmigen bzw. plattenförmigen Verbindungsbereich 3 aufweist, ein Verbindungskörper 4, der an dem Verbindungsbereich 3 des ersten Bauteils 1 fest angeordnet ist, eine selbstschneidende bzw. gewindefurchende Schraube 5 und ein zweites Bauteil 2. Vorteilhaft ist das Bauteil 1 insgesamt flach bzw. plattenförmig, auch wenn es nicht zwingend überall bzw. vollständig plan sein muss, es kann auch ansonsten gewölbt sein. Das zweite Bauteil 2 ist glockenförmig und mittels der Schraube 5 fest mit dem Verbindungskörper 4 und dem ersten Bauteil 1 verbunden. Es steht quasi allgemein für ein zweites Bauteil.

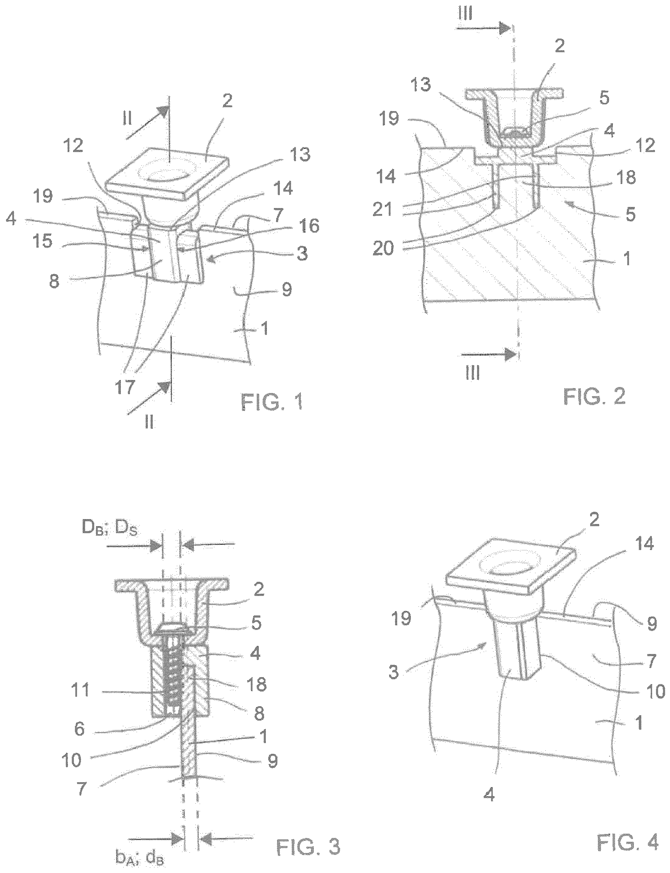

Der Verbindungskörper 4 weist eine Bohrung 6 auf, die entlang bzw. parallel zu dem ersten Bauteil 1 auf einer ersten Seite 7 des ersten Bauteils 1 angeordnet ist. Außerdem weist er einen Widerlagerabschnitt 8 auf, der an einer von der ersten Seite 7 abgewandten, zweiten Seite 9 des ersten Bauteils 1 angeordnet ist, wie beispielsweise in der Fig. 3 gezeigt ist. Der Verbindungskörper 4 ist vorzugsweise fest, insbesondere auch lösbar, mit dem Verbindungsbereich 3 des ersten Bauteils 1 verbunden.

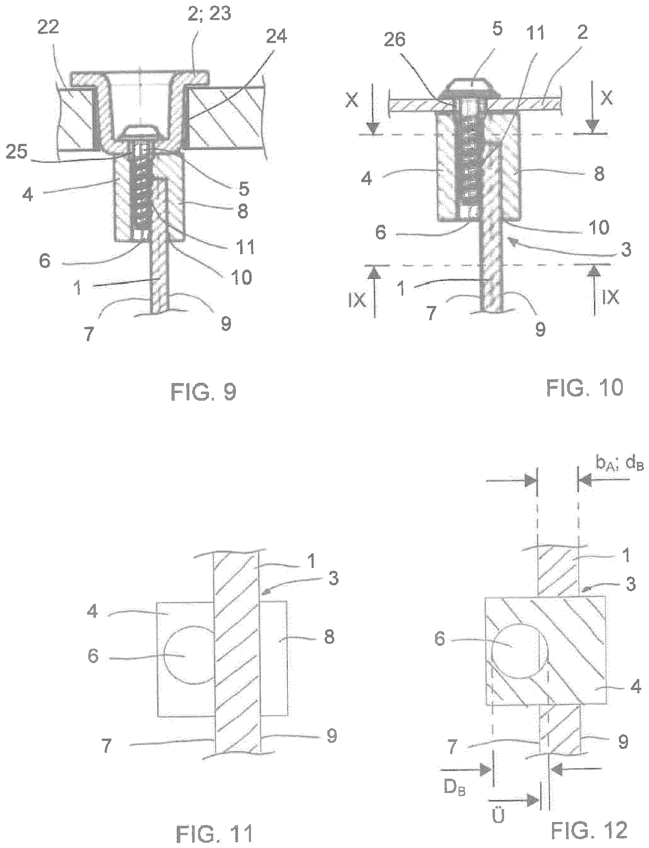

Bei der erfindungsgemäßen Schraubverbindung weist der Verbindungskörper 4 eine Ausnehmung 10 am Widerlagerabschnitt 8 auf, wobei das erste Bauteil 1 durch die Ausnehmung 10 verläuft, wie insbesondere in der Fig. 3 dargestellt ist. Die Bohrung 6 im Verbindungskörper 4 steht zumindest teilweise über oder in das erste Bauteil 1 derart über bzw. verläuft darüber, dass die in die Bohrung 6 eingeschraubte Schraube 5 in einem von ihr geformten bzw. geschnittenen Gewinde 11 in das erste Bauteil 1 eingeschraubt ist, wie insbesondere in den Fig. 3 und 12 gezeigt ist. Die Schraube 5 schneidet bzw. furcht dabei Teil-Gewindegänge in das erste Bauteil 1.

Bei den gezeigten Ausführungen ist das erste Bauteil 1 aus einem Kunststoffmaterial, wie z.B. aus einem Thermoplast oder aus einem Duroplast, ausgebildet. In alternativen Ausführungen kann das erste Bauteil 1 aus Holz, aus einem Weichmetall, wie z.B. Aluminium, Zink oder Magnesium, oder aus einem Hartmetall, wie z.B. Stahl, sein. Jedenfalls sollten die Materialien für das erste Bauteil 1 und für die Schraube 5 so gewählt sein, dass die Schraube 5 wie beschrieben Teil-Gewindegänge in das erste Bauteil 1 schneiden bzw. furchen kann. Das erste Bauteil 1 ist vorzugsweise ein Spritzgussteil.

Zur Montage bzw. Verbindung der zwei Bauteile 1, 2 miteinander wird zunächst der Verbindungskörper 4 mittels der Ausnehmung 10 auf das erste Bauteil 1, insbesondere an dem Verbindungsbereich 3, aufgesetzt bzw. aufgestülpt. Das erste Bauteil 1 verläuft also in der schlitzartigen Ausnehmung 10. Anschließend kann das zweite Bauteil 2 auf das erste Bauteil 1 bzw. auf eine Oberseite bzw. Stirnseite 13 des Verbindungskörpers 4 aufgelegt werden, und mit diesem verschraubt werden bzw. mit der erfindungsgemäßen Schraubverbindung verbunden werden. Danach wird die Schraube 5 durch das zweite Bauteil 2 in die Bohrung 6 in dem Verbindungskörper 4 geschraubt. Dabei schneidet bzw. furcht die Schraube 5 zumindest im Verbindungsbereich 3 des ersten Bauteils 1 ein Gewinde 11 in dessen eine Außenseite ein. In den gezeigten Ausführungen schneidet bzw. furcht die Schraube 5 nur im Verbindungsbereich 3 des ersten Bauteils 1 ein Gewinde 11 ein. Die Innenseite der Bohrung 6 im Verbindungskörper 4 dient hierbei für die Schraube 5 als eine Art Widerlager, so dass sich das Gewinde der Schraube 5 möglichst stark in das erste Bauteil hinein formt bzw. schneidet. In alternativen Ausführungen schneidet bzw. furcht die Schraube 5 zusätzlich in den Verbindungskörper 4 ein Gewinde bzw. ein. So kann sie insgesamt eine stabilere Verbindung bilden, vor allem kann die Schraube 5 auch durch diese Teil-Gewindegänge, die sich über weit mehr als den halben Umfang der Schraube 5 erstrecken, einen festeren Halt haben.

In einer konstruktiv vorteilhaften Ausführung steht die Bohrung 6 im Verbindungskörper 4 mindestens um 5%, vorzugsweise um mindestens 10%, des Durchmessers D_{B} der Bohrung 6 über das erste Bauteil 1 über, wie dies insbesondere in der Fig. 12 gezeigt ist. Hier sind es etwas unter 20%. Das Maß einer Überschneidung Ü zwischen der Bohrung 6 im Verbindungskörper 4 und dem ersten Bauteil 1 entspricht vorzugsweise im Wesentlichen einer Gewindetiefe der Schraube 5, die Schraube 5 kann also hier bis zu ihrem Schraubenkern einschneiden.

In den gezeigten Ausführungen entspricht der Durchmesser Ds der Schraube 5 dem Durchmesser D_{B} der Bohrung 6, wie insbesondere in der Fig. 3 dargestellt ist. Dabei greift das Gewinde der Schraube 5 vorzugsweise nur in das erste Bauteil 1 ein. In alternativen Ausführungen liegt die Bohrung 6 im Verbindungskörper 4 an dem ersten Bauteil 1 an. Dabei ist der Durchmesser Ds der Schraube 5 größer als der Durchmesser D_{B} der Bohrung 6, so dass sich beim Einschrauben der Schraube 5 deren Gewinde in das erste Bauteil 1 formt bzw. einschneidet.

In einer konstruktiv vorteilhaften Ausführung greift die Schraube 5 innerhalb bzw. entlang der Bohrung 6 in das erste Bauteil 1 ein, wie in den Fig. 3, 9 und 10 gezeigt ist. In den gezeigten Ausführungen ist die Schraube 5 vollständig in dem Verbindungskörper 4 aufgenommen, wie insbesondere in den Fig. 3 und 4 gezeigt ist.

In einer nicht dargestellten Ausführung greift die Schraube 5 entlang der gesamten Bohrung 6 in das erste Bauteil 1 ein. In weiteren nicht dargestellten Ausführungen greift die Schraube 5 außerhalb der Bohrung 6, insbesondere in Einschraubrichtung nach der Bohrung 6, in das erste Bauteil 1 ein.

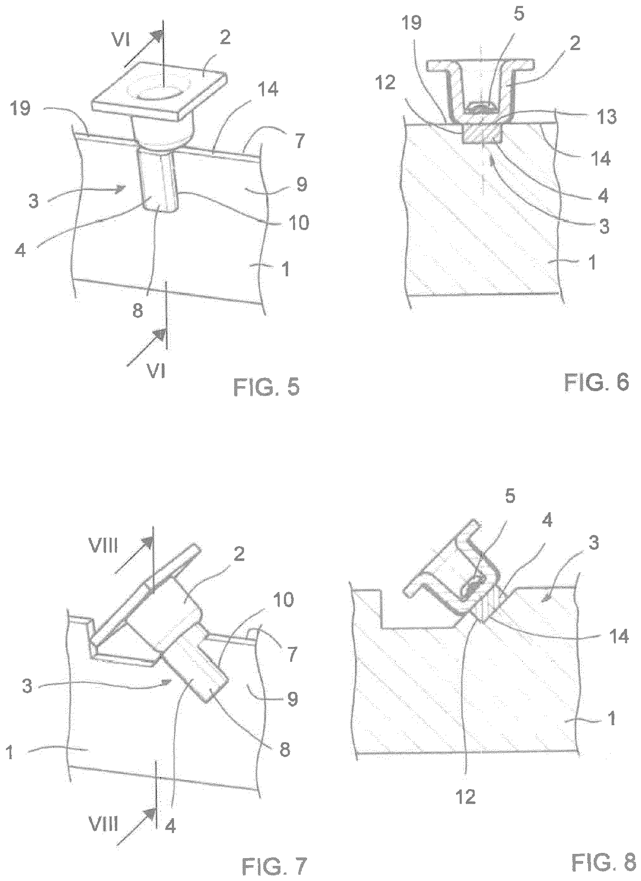

In einer vorteilhaften Realisierung weist das erste Bauteil 1 am Rand 14 eine Aufnahmeausnehmung 12 auf, in welche der Verbindungskörper 4 derart eingesetzt ist, dass er weiter vom Rand 14 weg zur Fläche des ersten Bauteils 1 versetzt ist, wie in den Fig. 1 und 2 dargestellt ist. Dabei ist vorzugsweise eine Stirnseite 13 des Verbindungskörpers 4, durch welche die Bohrung 6 verläuft, bündig mit einer Stirnseite 19 des ersten Bauteils 1, wie in der Fig. 6 dargestellt ist. Bei dieser Ausführung liegt das zweite Bauteil 2 unmittelbar auf dem ersten Bauteil 1 bzw. der Stirnseite 13 des Verbindungskörpers 4 auf.

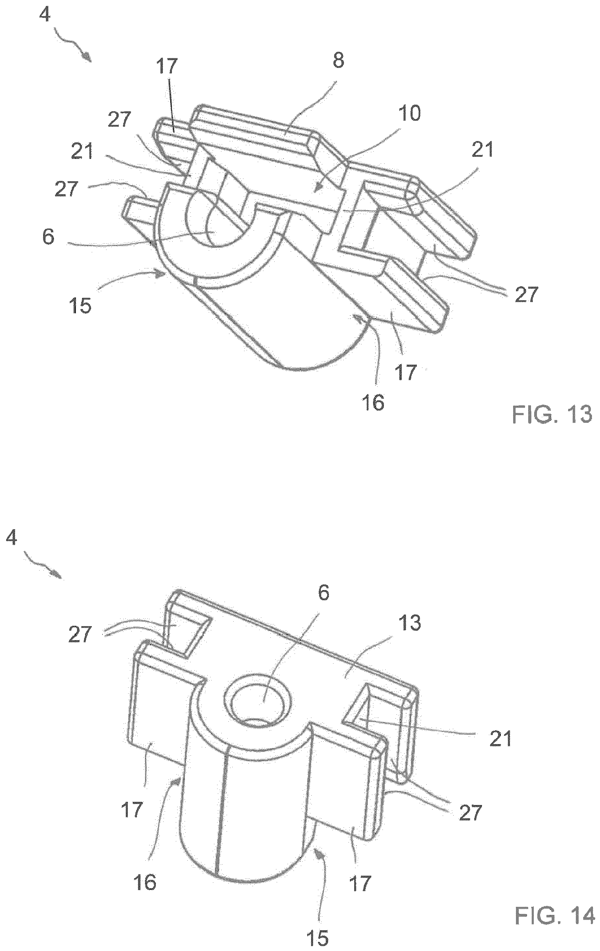

In vorteilhaften Ausführungen weist der Verbindungskörper 4 zumindest an einer Seite 15, 16 der Ausnehmung 10 ein Stützelement 17 auf, das gegen eine Seite 7, 9 des ersten Bauteils 1 anliegt, wie die Fig. 1 zeigt. Das Stützelement 17 fungiert als zusätzliche seitliche Abstützung und sichert den Verbindungskörper 4 beim Einschrauben der Schraube 5 gegen eine Verdrehung und/oder eine Verformung, insbesondere bei hohen Anzugsmomenten an der Schraube 5. Bei der gezeigten Ausführung gemäß der Fig. 1 liegt das Stützelement 17 klammerartig gegen beide Seiten 7, 9 des ersten Bauteils 1 an. Dabei entspricht ein Abstand zwischen den beiden innenliegenden Klammerflächen 27 zueinander, wie in den Fig. 13 und 14 dargestellt ist, einer Dicke d_{B} des ersten Bauteils 1 im Verbindungsbereich 3. So liegen die Klammerflächen 27 an dem ersten Bauteil 1 formschlüssig an und sorgen für eine stabile Verbindung.

In einer konstruktiv vorteilhaften Ausführung überschneidet sich die Ausnehmung 10 des Verbindungskörpers 4 zumindest teilweise mit der Bohrung 6 im Verbindungskörper 4, wie insbesondere in der Fig. 13 gezeigt ist.

In einer nicht gezeigten Ausführung liegt die Ausnehmung 10 des Verbindungskörpers 4 unmittelbar an der Bohrung 6 im Verbindungskörper 4 an.

In einer vorteilhaften Realisierung entspricht eine Breite b_{A} der Ausnehmung 10 des Verbindungskörpers 4 einer Dicke d_{B} des ersten Bauteils 1 im Verbindungsbereich 3, wie in der Fig. 3 gezeigt ist. Dadurch ist der Verbindungskörper 4 auf das erste Bauteil 1 passgenau bzw. formschlüssig aufgesetzt bzw. aufsetzbar.

In einer weiteren konstruktiv vorteilhaften Ausführung ist die Bohrung 6 im Verbindungskörper 4 eine auf beiden Seiten offene Durchgangsbohrung, wie in den Fig. 3, 9 und 10 gezeigt ist.

In einer nicht gezeigten Ausführung ist die Bohrung 6 im Verbindungskörper 4 eine an einer, insbesondere der Stirnseite 13 gegenüberliegenden, Seite geschlossene Sackbohrung.

In vorteilhaften Ausführungsformen besteht der Verbindungskörper 4 aus einem Kunststoffmaterial. Dabei ist der Verbindungskörper 4 vorzugsweise ein Spritzgussteil. Der Verbindungskörper 4 ist vorzugsweise aus einem faserverstärkten Kunststoff, wobei der Kunststoff z.B. mit Glasfasern verstärkt ist. In alternativen Ausführungen ist der Verbindungskörper 4 aus einem Metall, z.B. aus Stahl oder aus Gusseisen.

In einer konstruktiv vorteilhaften Ausführung ist der Verbindungskörper 4 U-förmig ausgebildet. Dabei weist eine Seite des Verbindungskörpers 4 die Bohrung 6 für die Schraube 5 auf und die andere Seite weist den Widerlagerabschnitt 8 auf bzw. entspricht diesem, wie insbesondere in den Fig. 3 bis 5 gezeigt ist. In der alternativen Ausführung gemäß der Fig. 13 und 14 ist der Verbindungskörper 4 kastenförmig bzw. blockartig ausgebildet bzw. seitlich verschlossen.

In vorteilhaften Ausführungsformen ist das zweite Bauteil 2 ein glockenförmiger Aufsatz 23, welcher mit einem dritten Bauteil 22 verbunden ist, wie in der Fig. 9 gezeigt ist. Dazu weist in der gezeigten Ausführung das dritte Bauteil 22 eine Bohrung 24 auf, in welche der glockenförmige Aufsatz 23 formschlüssig eingesetzt ist. Das dritte Bauteil 22 ist mittels des glockenförmigen Aufsatz 23 mit dem ersten Bauteil 1 bzw. dem Verbindungskörper 4 verbunden. Dazu weist der glockenförmige Aufsatz 23 eine zur Bohrung 6 im Verbindungskörper 4 korrespondierende Bohrung 25 auf.

Bei der in Fig. 10 gezeigten Ausführung ist das zweite Bauteil 2 plattenförmig ausgebildet. Dabei weist das zweite Bauteil 2 vorzugsweise eine Bohrung 26 auf, durch welche die Schraube 5 in den Verbindungskörper 4 geschraubt ist, und dadurch das zweite Bauteil 2 mit dem ersten Bauteil 1 fest verbindet.

In einer konstruktiv vorteilhaften Ausführung ist im Verbindungsbereich 3 des ersten Bauteils 1 eine Rippenzunge 18 durch zwei parallele Schlitze 20 ausgeformt, auf welche der Verbindungskörper 4 aufgesetzt ist und die Rippenzunge 18 vollumfänglich umschließt, wie in der Fig. 2 gezeigt ist. Der Verbindungskörper 4 verläuft mit Verbindungsrippen 21 zum Widerlagerabschnitt 8 formschlüssig in den Schlitzen 20, wie in den Fig. 2 und 13 dargestellt ist.

Wie die gezeigten und die weiteren oben erwähnten Ausführungsbeispiele deutlich machen, stellt die Erfindung eine Schraubverbindung zur Verfügung, die gegenüber herkömmlichen Schraubverbindungen oder auch sonstigen Klemmverbindungen Vorteile bietet, insbesondere hinsichtlich Aufbau, Herstellungsaufwand, Montage- und Demontageaufwand, Funktionsweise, Flexibilität, Stabilität und/oder Wiederverwendbarkeit.

## Patentansprüche

1. Schraubverbindung zur festen Verbindung zweier Bauteile (1, 2) miteinander, wobei die Schraubverbindung aufweist:
- ein erstes Bauteil (1), das an einem Rand (14) davon zumindest abschnittsweise einen rippenförmigen Verbindungsbereich (3) aufweist,
- einen Verbindungskörper (4), der an dem rippenförmigen Verbindungsbereich (3) des ersten Bauteils (1) fest angeordnet ist,
- eine selbstschneidende Schraube (5),
- ein zweites Bauteil (2), das mittels der selbstschneidenden Schraube (5) fest mit dem Verbindungskörper (4) und dem ersten Bauteil (1) verbunden ist,
- wobei der Verbindungskörper (4) eine Bohrung (6) aufweist, die entlang bzw. parallel zu dem ersten Bauteil (1) auf einer ersten Seite (7) des ersten Bauteils (1) angeordnet ist, und einen Widerlagerabschnitt (8) aufweist, der an einer der ersten Seite (7) abgewandten, zweiten Seite (9) des ersten Bauteils (1) angeordnet ist,
**dadurch gekennzeichnet, dass**
- der Verbindungskörper (4) eine Ausnehmung (10) am Widerlagerabschnitt (8) aufweist und das erste Bauteil (1) durch die Ausnehmung (10) verläuft,
- die Bohrung (6) im Verbindungskörper (4) zumindest teilweise über das erste Bauteil (1) derart übersteht, dass die in die Bohrung (6) eingeschraubte Schraube (5) in einem von ihr geformten Gewinde (11) in das erste Bauteil (1) eingeschraubt ist.

2. Schraubverbindung nach Anspruch 1, **dadurch gekennzeichnet, dass** die Bohrung (6) im Verbindungskörper (4) mindestens um 5%, vorzugsweise um mindestens 10%, des Durchmessers (D_{B}) der Bohrung (6) über oder in das erste Bauteil (1) übersteht, insbesondere bis zu 35%.

3. Schraubverbindung nach Anspruch 1 oder 2, **dadurch gekennzeichnet, dass** die Schraube (5) innerhalb bzw. entlang der Bohrung (6) in das erste Bauteil (1) eingreift, vorzugsweise entlang der gesamten Bohrung (6).

4. Schraubverbindung nach einem der vorhergehenden Ansprüche, **dadurch gekennzeichnet, dass** das erste Bauteil (1) am Rand (14) eine Aufnahmeausnehmung (12) aufweist, in welche der Verbindungskörper (4) derart eingesetzt ist, dass er weiter vom Rand (14) weg zur Fläche des ersten Bauteils (1) versetzt ist.

5. Schraubverbindung nach Anspruch 4, **dadurch gekennzeichnet, dass** eine Stirnseite (13) des Verbindungskörpers (4), durch welche die Bohrung (6) verläuft, mit einer Stirnseite (19) des ersten Bauteils (1) bündig ist.

6. Schraubverbindung nach einem der vorhergehenden Ansprüche, **dadurch gekennzeichnet, dass** der Verbindungskörper (4) zumindest an einer Seite (15, 16) der Ausnehmung (10) ein Stützelement (17) aufweist, das gegen eine Seite (7, 9) des ersten Bauteils (1) anliegt.

7. Schraubverbindung nach Anspruch 6, **dadurch gekennzeichnet, dass** das Stützelement (17) klammerartig gegen beide Seiten (7, 9) des ersten Bauteils (1) anliegt.

8. Schraubverbindung nach einem der vorhergehenden Ansprüche, **dadurch gekennzeichnet, dass** sich die Ausnehmung (10) des Verbindungskörpers (4) zumindest teilweise mit der Bohrung (6) im Verbindungskörper (4) überschneidet.

9. Schraubverbindung nach einem der vorhergehenden Ansprüche, **dadurch gekennzeichnet, dass** eine Breite (b_{A}) der Ausnehmung (10) des Verbindungskörpers (4) einer Dicke (d_{B}) des ersten Bauteils (1) im Verbindungsbereich (3) entspricht.

10. Schraubverbindung nach einem der vorhergehenden Ansprüche, **dadurch gekennzeichnet, dass** die Bohrung (6) im Verbindungskörper (4) eine auf beiden Seiten offene Durchgangsbohrung ist.

11. Schraubverbindung nach einem der vorhergehenden Ansprüche, **dadurch gekennzeichnet, dass** der Verbindungskörper (4) aus einem Kunststoffmaterial ist, vorzugsweise ein Kunststoffspritzgussteil ist.

12. Schraubverbindung nach einem der vorhergehenden Ansprüche, **dadurch gekennzeichnet, dass** der Verbindungskörper (4) U-förmig ausgebildet ist.

13. Schraubverbindung nach einem der vorhergehenden Ansprüche, **dadurch gekennzeichnet, dass** das zweite Bauteil (2)
- ein glockenförmiger Aufsatz (23) ist, welcher mit einem dritten Bauteil (22) verbunden ist, oder
- plattenförmig ausgebildet ist.

14. Schraubverbindung nach einem der vorhergehenden Ansprüche, **dadurch gekennzeichnet, dass** im Verbindungsbereich (3) des ersten Bauteils (1) eine Rippenzunge (18) durch zwei parallele Schlitze (20) ausgeformt ist, auf welche der Verbindungskörper (4) aufgesetzt ist und die Rippenzunge (18) vollumfänglich umschließt.

15. Schraubverbindung nach Anspruch 14, **dadurch gekennzeichnet, dass** der Verbindungskörper (4) mit Verbindungsrippen (21) zum Widerlagerabschnitt (8) in den Schlitzen (20) verläuft.
